# EUROPEAN PATENT SPECIFICATION

(11) **EP 1 460 835 B1**
(45) Date of publication and mention of the grant of the patent: **14.11.2018**
(21) Application number: 04004170.9
(22) Date of filing: 25.02.2004
(51) Int. Cl.: H04N 5/222

(54) **Method for identification of tokens in video sequences**
Verfahren zur Identifizierung von Marken in Videosequenzen
Méthode pour identifier des repères dans des séquences vidéo

(30) Priority: 19.03.2003 EP 03290696
(43) Date of publication of application: 22.09.2004
(73) Proprietor: InterDigital Madison Patent Holdings, 75017 Paris (FR)
(72) Inventor: Stauder, Jürgen, 35440Montreuil sur Ille (FR); Chupeau, Bertrand, 35700 Rennes (FR); Oisel, Lionel, 35137 Pleumeleuc (FR); Chevallier, Louis, 35520 La Meziere (FR)
(74) Representative: Huchet, Anne

(56) References cited:
- EP-A- 1 085 456
- WO-A-97/37489
- US-A- 5 809 161
- US-A- 5 969 755
- US-A1- 2001 005 430

## Description

The invention relates to a method for identification of tokens in video sequences and the extraction of data contained thereon.

### Background

In film productions, tokens are frequently used to indicate the start of new take or shot. These tokens may, *inter alia,* appear in the form of slates, often also referred to as clapperboards, clapboards or clappers. Other tokens can be vehicle license plates, traffic signs or posters. In a larger sense, tokens can be any objects having typical appearance and having readable symbols on it.

US5,809,161 discloses a vehicle monitoring system in which a camera generates images of an area in order to acquire a pre-determined object. The system uses a stored background image and a current image, which is subtracted the background image. Then an object-recognition is performed to extract license plate details.

In the following, the term slate is used interchangeably as a synonym of a token where appropriate for better understanding.

Slates typically have a body and a hinged arm, which is slapped against the body at the beginning of the take. Slates can additionally contain written, printed or electronically displayed information about the take. This information may include production title, scene title, take title, take number, date and time.

When producing a film, individual scenes are often taken repeatedly until the director is satisfied with the results or in order to have different views of the same scene for later selection. At the beginning of a take the slate is filmed and the slate arm is slapped to the slate body. The slapping of the slate may be used during post-processing for synchronizing the audio and video tracks. During a day of film production, a number of takes are captured, possibly by multiple cameras. Each camera will deliver one or more video sequences. Each video sequence - also called daily - contains a number of takes, up to several hundred. The video sequences may physically be contained on film rolls, magnetic tapes, hard disc drives (HDD), optical discs or other types of media. The format may be analog, digital, uncompressed or compressed, e.g. according to the MPEG standard. In general, accompanying audio tracks are captured with audio tools and stored on specific audio media.

After production, the dailies are post-processed. During post-processing the various takes are reviewed for quality and/or acceptability by the director and/or the cutter for identifying the take which will be used for the completed film. In order to find the beginning of a respective take, the video sequence is reviewed for the occurrence of slates. The correct and reliable identification of slates is important for several reasons. First, detected slates indicate the start of a new take. Second, extracted information from slates is necessary for shot processing. Third, identified slates assist in the synchronization of dailies with audio tracks. Audio-visual synchronization is realized either by using audio information from the slate or by detecting the time instant when the arm of the slate makes contact with the body. More recently introduced slates incorporate an electronic display, which continuously displays a time code. A time code control may then synchronize the time code in a sound recording apparatus and a camera. By doing so it is possible to assign to each image the accompanying sound information.

Until today, the process of searching slates in recorded material is often done manually, which is time consuming and sometimes cumbersome. Manual slate identification requires manually cueing or rewinding the recording to the occurrence of a slate, i.e. slate detection, and extracting the information on the slate. This task is performed by an operator using a video terminal with playback / forward / backward functions. The information from the slates is then read and manually entered into an audio-visual synchronization tool. After that, for synchronization purposes, the status of the slate arm has to be detected, i.e. the slapping of the arm to the body.

In view of the time consuming manual process of detecting the occurrence of a token in a video sequence, manually extracting the information on the token and entering the information into a synchronization tool, it is desirable to provide a method for automatically performing this task.

### Invention

The invention disclosed hereinafter therefore provides a method for automatically screening video sequences, detecting the occurrence of tokens, extracting the information and providing the information to editing tools, or other means for post-processing, according to the independent claim 1. Preferred embodiments are disclosed in the dependent subclaims.

According to the method of the invention, a video sequence is scanned for boundaries between individual takes. Boundary scanning comprises creating a histogram from image properties for consecutive images. A histogram may advantageously be derived from the luminance signal of a video sequence. However, the invention is not limited to this signal, and other signals, signal components, e.g., chrominance, or other image properties may be used. Histograms may also be derived based on low resolution versions or filtered versions of the images from the video sequence. Using low resolution images advantageously reduces the computational power required. The filtering may comprise, e.g., low-pass filtering to reduce high frequency image components, although other filtering techniques are conceivable, depending on the representation of the video signal and the image property selected for creation of the histogram. In another embodiment, the histogram is derived using DC or low-frequency coefficients of an image transform of images from the video sequence. An applicable common image transforms are of DCT (discrete cosine transform) type. The histograms may further be subject to filtering. Then, the distance between the histograms of images is calculated. In the event that the distance calculated exceeds a preset threshold, a signal is issued, which indicates detection of a boundary. After a boundary is detected, candidate regions in the images following the boundary, so called candidate images, are scanned. Images may be frames of progressive video or fields of interlaced video and are, for the sake of clarity, referred to hereinafter as images. It is assumed, that a slate occurs within a certain time after the beginning of a take, e.g. within the first 45 seconds of a take. Therefore, and in order to detect false boundary detection, a timer is started, which stops the process after a certain time or length of the video sequence has been processed without producing a reasonable result. It is also possible to start searching for tokens on both sides of the detected boundary. To reduce computational load and to improve the detection rate, only a limited number of images of high image quality may be selected as candidate images. For compressed video, the candidate images may be intra-coded frames, also referred to as I-frames. The candidate images can also be sub-sampled, or, in interlaced video, only one field may be used. Candidate image scanning is stopped when a timer time-out occurs, as mentioned above, or when other steps of the method, produce a reasonable result, e.g. the information of a slate was correctly extracted and/or the slate arm status detection routine signals successful termination. The scanning comprises pre-selecting candidate regions in candidate images, which are regions in which slates are likely to be found. Pre-selection of candidate regions aims to output a high number of candidate regions such that a very high recognition rate is accomplished. A high recognition rate means that nearly all slates are included in candidate regions. At the same time the pre-selection may have low precision. Low precision means that there are many false detections among the candidate regions. Before the pre-selection of candidate regions is begun one or multiple reference feature value sets corresponding to one or multiple types of tokens are computed from a reference image or a training set of multiple reference images. The reference feature value set is, e.g., extracted from the pixel values of an image or of a rectangular bounding box. E.g., a color histogram may be used as a basis for a feature value set. An efficient histogram type is, e.g., a histogram of 512 bins, obtained from a non-linear quantization of YCrCb space (Y representing luminance and Cr and Cb red and blue chrominance), where Y, Cr and Cb represent axes defining the three dimensions of space. For quantization, each color axis is divided into equally sized classes. Rather coarse division is made for luminance Y, e.g. 8 classes, and a finer subdivision is made for the two chrominance axes Cr and Cb, e.g. 128 subdivisions. Depending on the slate type to be detected, the color histogram is computed inside a suitably shaped area, e.g. a rectangular bounding box, or inside a sub-region of the area. Electronic slates usually contain typical areas of alternating colors, called color zebras, and electronic digits on the upper half, while the lower part is less discriminatory with respect to the background content. Here, the color histogram is computed in the upper half of a rectangular bounding box. However, the feature value set may be generated using only part of the image information, e.g., the luminance only, or based on other image properties, depending on the image representation. During the process of pre-selecting candidate regions, each candidate image is spatially scanned by the suitably shaped scanning window - also referred to as the candidate bounding box - at varying spatial locations, with different window sizes and with different aspect ratios corresponding to different slate types. The scanning window may advantageously have a rectangular shape, but the invention is not limited to a certain shape of the scanning window. An overlap of multiple candidate bounding boxes may occur.

A distance between a bounding box, or scanning window, and a reference feature value set can be computed as the distance between two histograms, the histogram for the reference feature value set and the histogram for the bounding box. This distance may also be referred to as visual distance. A simple histogram intersection distance, i.e. the sum of bin-to-bin absolute values of differences, may be used. A feature value set is computed for each scanning window and each window location and compared to the reference feature value sets. Programs for fast computation of feature value sets at multiple locations and for fast determination of a list of several "best match" candidate regions are available on the software market, e.g. a software for optical inspection of printed circuit boards may be used as a basis.

The pre-selection module eventually provides a list of bounding boxes, possibly with different sizes, ordered with increasing distance to the reference feature value sets. The list may be truncated for performance reasons. The resulting bounding boxes are called candidate regions.

The candidate regions are then classified, and tokens are located in the candidate regions. At the beginning of classification, one or several classifiers corresponding to one or several token types are learned from one or several training sets of example images. The images of a training set, e.g., either show a token or do not show a token. For each image it is known whether a token is shown or not. For learning from a training set, two steps are carried out. In a first step, feature values are calculated from the pixels of each image. Feature values may be color or luminance histogram values, edge direction histograms, wavelet subband energies or other known visual image feature values or combinations thereof. Then, in a second step, support vectors in the feature value space are extracted by a Support Vector Machine (SVM). A reference model is in this case a set of *J* vectors {*v*,0≤*j≤J,vⱼ*∈*R^{N}*} where *N* is the number of feature values. Other learning methods such as k-means clustering or neural networks may also be used.

Then, feature values are extracted from the pixels in each candidate region and classified into token or non-token according to the learned classifier. A classification confidence value is associated to the classification result. The co-pending European patent application No. 02090360.5 titled "Method and apparatus for automatically or electronically calculating confidence measure values for the correctness or reliability of the assignment of data item samples to a related one of different data class" proposes confidence measures for SVM classifiers and k-means-clustering-based classifiers.

For each candidate image a final processing is applied to all classified candidate regions. When there are more than one candidate regions classified as token, a limited number of candidate region with the highest confidence values are selected and output. If there is no candidate region classified as token, no candidate region is output and the classification confidence is the average value of confidence values from all candidate regions.

One example of feature values used for classification is described in the following. 25 feature values are used. All 25 feature values are calculated from all pixels of a given image (for learning) or a given candidate region (for prediction). 12 feature values are extracted from a 12-bin short color histogram. The short color histogram is calculated by linear quantization from the original color histogram such as described for pre-selection. The 13^{th} value is extracted by ordering the original color histogram with respect to increasing bin-values. From the ordered histogram, a cumulative histogram is calculated. Let the *n*-th bin of the cumulative histogram be - in increasing order - the first that is equal or higher than a given threshold *Th1.* The 13^{th} feature value is set to *n.* A typical threshold *Th1* is 0.90. The last 12 feature values are extracted from a 12-bin edge direction histogram.

For edge histogram calculation, the given image or candidate region is low-pass filtered and edge pixels are detected, for example using a Deriche filter. The detected edge pixels are connected to form continuous edges using, e.g., a gradient analysis in the local neighborhood of edge pixels. The continuous edges are polygonized. The directions of the resulting polygons are described by the edge direction histogram.

Before learning of classifiers, described feature values are normalized with respect to their standard deviation and mean estimated from the learning sets. The same estimations of mean and standard deviation are used to normalize feature values extracted from a candidate region before application of the classifier.

For locating of tokens, one or several reference images showing one or several types of tokens, respectively, are selected. Then, a number of candidate regions that are classified as tokens and having best classification confidence values are selected. For each selected candidate region, a number of candidate bounding boxes is defined. The size of candidate bounding boxes varies and is defined by a set of size factors with respect to the considered candidate region. For example eight size factors 1.0, 1.25, 1.5, .... 2.75 may be used. For each size factor, a number of candidate bounding boxes with varying positions are generated. The positions vary horizontally and vertically. The distance between two close candidate bounding boxes is defined by a step factor with respect to the bounding box size. E.g., a step factor of 0.1 may be used. The candidate bounding boxes cover in a regular manner an image area centered around the considered candidate region and having a size of, e.g., 2.25 times the size of the considered candidate region. For each candidate bounding box correlation coefficients are calculated. In the YPrPb color representation coefficients may advantageously be calculated as one for the luminance Y and two for the chrominance Pr, Pb. Other coefficients may be used for other representations of the images, or only some of the possible number of coefficients may be calculated. The correlation is carried out between the pixels of the candidate bounding box and at least one reference image. Before correlation, the candidate bounding box may be decimated or interpolated in its spatial resolution. The reference image may also be decimated or interpolated such that the number of pixels of the reference image and the candidate bounding box finally correspond. The correlation coefficients are averaged to define a matching confidence value. For averaging, weighting factors may be used such that either the luminance or a chrominance has more influence than the others. For example, the luminance and chrominance Cr can be averaged and chrominance Cb is weighted by zero, i.e. not used. For each selected candidate region, the token location is indicated by the "best match" candidate bounding box, i.e. having highest matching confidence value. The highest matching confidence value serves as location confidence value. If the location confidence value is lower than a threshold *Th2* a selected candidate region may be re-classified to "not being a slate". A typical value for the threshold *Th2* is, e.g., 0.4.

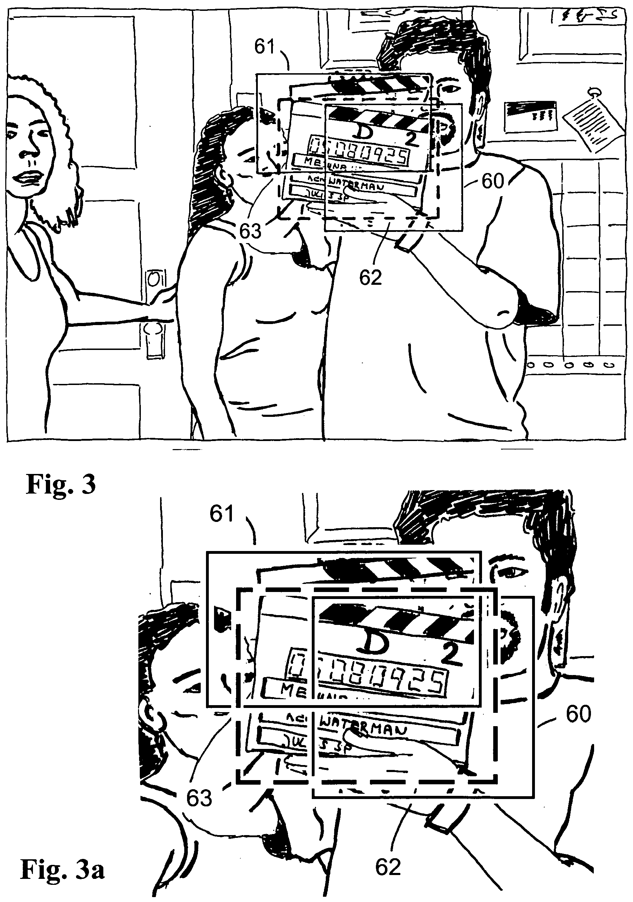

After the token is located, areas carrying information on the token are located, and the information is extracted. This information may include handwritten text, printed text and electronically displayed text. One example for electronically displayed text is a time-code display in red LED digits on current slate types. A slate with an electronic time-code display is used in the scene of Fig. 3. In this case, information extraction aims at determining the numerical value associated with the time-code located on the slate. Information extraction comprises information locating and information interpretation.

The input to information locating is a candidate image showing a token and token location data (e.g., position and size of a bounding box). The orientation of the token is supposed to be unknown. For information locating a rectangular sub-image, which circumscribes the area carrying information, is cut from the candidate image. In the case of a slate with electronic digits, the area with the electronic digits is selected. The size and position of the sub-image is computed from the token location by applying two predefined ratios on its height and width. These ratios differ for different token types. The sub-image may be pre-processed. Pre-processing may comprise filtering and/or subsampling in order to obtain a smaller image (e.g. 40x30 pixels). Then, a probability map is constructed. For each pixel of the sub-image, or the pre-processed version thereof, a value representing the probability for this pixel belonging to a digit is computed. This probability is obtained, e.g., by comparing pixel color values of the sub-image to a color digit probability distribution previously learned from a large database of digit pixels. Other methods for obtaining a probability map are conceivable, e.g., methods based on shape analysis or the like, and other image properties may be used to generate the probability map, e.g. the luminance, or contrast between two neighboring pixels. The last step is finding the digit area rectangle that has maximum digit color probability. This digit color probability is taken as the average of the probabilities associated with all the pixels belonging to the considered rectangle. The optimizing scheme is a full search based algorithm. For each possible position of the center and each possible rotation of the rectangle the probability value is computed. The resulting rectangle corresponds to the one with maximum probability value.

For information interpretation, the located information is extracted from the probability map. If necessary, the area carrying information is rotated such that the digits are horizontally oriented. Then, the probability map values are binarized, e.g., by applying an adaptable threshold obtained by using a clustering algorithm that groups probability values into two clusters (digit or not digit). Binarizing means transferring the individual multi-bit pixel values into single bit pixel values. The binarized map may then be filtered, e.g. by applying morphological filtering using, e.g., closing and skeleton operators. Morphological operations manipulate shape, attempting to preserve essential shape while discarding irrelevancies. Skeleton and closing operations are, amongst others, commonly known in the field of image processing. The closing operation can fill in small holes, or gaps, in an image and generates a certain amount of smoothing on an object's contour. Closing smoothes from the outside of an object's contour. The skeleton operation tries to generate a representation of an object's essential shape, which is a one pixel thick line through the "middle" of an object, while preserving the topology of the object. The filtering applied is not limited to morphological filtering. Depending on the data and the further processing, other types of filtering are conceivable.

A classical OCR (Optical Character Recognition) method is then used to obtain the numerical information displayed by the digits, e.g. the time code. The OCR may also provide an interpretation confidence value for each digit, representing the probability that an information element was extracted and interpreted correctly. A confidence analysis is then performed on the information elements and the confidence values. Confidence analysis may comprise a consistency check across information extracted from consecutive images. A confidence analysis for electronically displayed time-code on slates may comprise, e.g., processing all time-codes detected in all candidate images using confidence values delivered by the OCR. Additionally, detected time-codes can be compared in consecutive images to verify the requirement that time-codes increase linearly with time. Due to errors in information extraction, this requirement may not always be fulfilled. Therefore, information element merging comprises replacing digits having low interpretation confidence or contradicting time information with interpolated digits such that the time requirement is fulfilled. This process outputs verified time-codes for at least one candidate image.

Finally, the information elements of all slates found in all consecutive candidate images are merged into a single, consistent set of information in order to eliminate false information.

In parallel, when a token is located, changes in the visual appearance are monitored. If the token is, e.g., a slate, the status of the slate arm is monitored in order to detect the closing of the slate arm. The visual appearance may also change in other ways, e.g., sudden or gradual change of colors or brightness, rotation, tilting, articulated motion, flipping the token over, or the like.

Monitoring the change of visual appearance shall in the following be exemplarily described for the slate arm status of a slate, i.e., slate arm open or closed. The monitoring process comprises detection of the slate arm, monitoring the movement of the slate arm and finally detection of slate arm closing, i.e., the slate arm making contact to the slate body.

For detecting a slate arm firstly a scanning window having a suitable shape is defined inside the considered candidate image. Amongst other possible shapes, e.g., trapezoid or circular, a rectangular scanning window may be preferred. The search window is defined based on data from the slate location process and with respect to predefined slate types. Visual feature values are classified into classes "slate arm" and "no slate arm", and a matching process similar to that of slate locating is carried out to locate the slate arm. Visual features comprise, *inter alia,* color, pattern and texture, or combinations thereof. Depending on the representation of the images in the color space, e.g., YPrPb, only part of the available image information may be used for the definition of the visual features. Once the slate arm is located, the movement of the slate arm is monitored in consecutive images. Information about the slate arm position with regard to the slate body is output for further processing.

For simplified monitoring of the slate arm's movement, the slate may be translated into a basic model, e.g., consisting only of rigid, but articulated bodies describing, e.g., the outline of the slate and the slate arm. For slate arm modeling several consecutive candidate images are analyzed by application of an articulated motion model. The motion model follows the motion of the slate arm. The articulation is the point where the slate arm is hinged to the slate body. The modeling process determines the following unknowns: Slate arm rotation angle, coordinates of articulation, orientation and inclination of slate. The unknowns can be estimated using well-known motion-estimation methods, for example feature matching, block matching or gradient method.

The arm closing detection analyses the motion estimation results and detects the time instant where the slate arm makes contact with the slate body. This can be accomplished by a dynamic motion model as for example the model of accelerated rotation. All along the candidate images, rotation angle, speed and acceleration of slate arm are estimated. Slate arm closing is detected when estimated slate arm rotation angle no longer follows the motion model, i.e. when the motion stops. The information output for further processing may comprise slate arm rotation angle and/or a binary value describing the slate arm status, i.e. opened or closed.

The process is ended when a slate is detected properly and usable information is extracted, or, as mentioned above, when a time-out of the timer occurs.

Before any processing as described before is applied, a given image, a given candidate region, or the data associated thereto, may be pre-processed. Pre-processing may enable or support the processing algorithm. Pre-processing may comprise, e.g., histogram equalization, filtering, or contrast stretching, depending on the processing to be executed.

Individual steps of the inventive method will be described hereinafter in detail with reference to the drawing. In the drawing,
Fig. 1 shows a basic chart of the overall process,
Fig. 2 shows a flowchart of an exemplary implementation of the boundary detection,
Fig. 3a shows a candidate image for slate detection with several candidate regions marked, and
Fig. 3b shows an enlarged detail of Fig. 3a.

In the drawing, identical or similar elements are assigned identical reference numerals or designators.

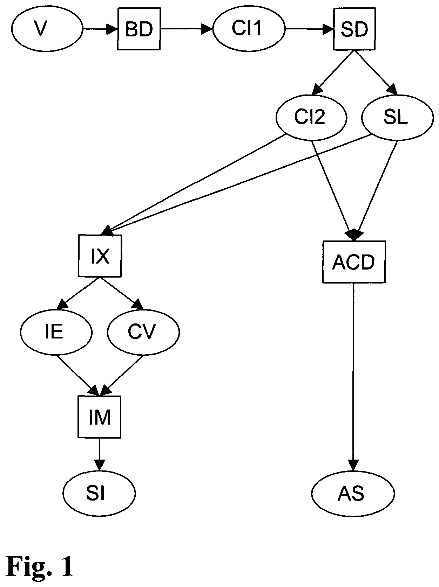

In Fig. 1 a basic chart of the overall method is shown. A video sequence V is subject to boundary detection BD in order to detect the beginning of a take. The boundary detection BD outputs first candidate images CI1, which are subject to slate detection SD. The slate detection SD outputs second candidate images CI2 and data on the slate location SL. In a first branch of the method the second candidate images CI2 and slate location data SL are processed for information extraction IX. The information extraction delivers information elements IE and associated confidence values CV to the information merging process IM. The information merging outputs slate information SI for further processing. In a second branch the second candidate images CI2 and slate location data SL are used for slate arm closing detection ACD. The slate arm closing detection ACD outputs data on the slate arm status AS for further processing.

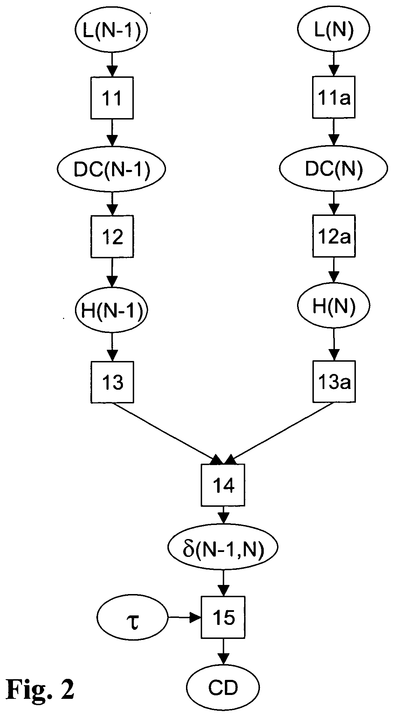

In Fig. 2 a flowchart for an exemplary implementation for detecting boundaries between two consecutive takes is shown. In this implementation, in a first step 11 luminance values of a first field L(N-1) are used to compute the field's DC values DC(N-1). The DC values may, e.g., be derived from a low resolution version of the image from the video sequence. If the video sequence is of the type compressed video, the DC values may be derived from the DC or low frequency coefficients of an image transform. The image transform may be a DCT (Discrete Cosine Transform), but the invention is not limited to this type of transform. In step 12 a first histogram H(N-1) is computed, and in step 13 the histogram H(N-1) is low-pass filtered. In a preferred embodiment, a 5-tap FIR (Finite Impulse Response) low-pass filter is used, but the invention is not limited to this type of filtering. In the same manner in step 11a the DC value DC(N) of a second field's luminance values L(N) are computed. A second histogram H(N) is computed in step 12a, and the second histogram is low-pass filtered in step 13a. In step 14 the distance δ(N-1, N) between the results of the low pass-filtering of steps 13 and 13a is calculated, and compared to a preset threshold value τ in step 15. The distance δ(N-1, N) is defined as the accumulation of bin-to-bin differences between consecutive images. If the distance δ(N-1, N) exceeds the threshold τ, a boundary is assumed to be found and a cut decision signal CD is issued.

In Fig. 3a a candidate image for slate detection is shown. The image shown was taken from a 704 x 480 pixel image and was transferred into a sketch drawing for better readability. The image shows a typical scene of a film production at the beginning of a take. Candidate regions were searched for at 9 different sizes of scanning windows, with a 1:1.25 ratio between 2 successive scanning windows. The resulting scanning window size ranged from full image size to 117 x 79 pixels. The spatial increment during scanning was a quarter of the window size, resulting in a total of 1009 possible locations tested. Three candidate regions (60, 61, 62) are displayed over a detected slate (63). Comparing the slate (63) and the three candidate regions (60, 61, 62), the candidate region (62) shown in dashed line has the smallest visual distance to a stored reference feature value set.

Fig. 3b is an enlarged detail of Fig. 3a showing the slate candidate regions (60, 61, 62) as well as the slate (63) .

Although the inventive method was described using a slate as an example, the invention is not limited to this special embodiment of a token. The invention is applicable to other conceivable tokens used in video production, such as a flashing display or the like.

## Claims

1. A method for automatically identifying tokens associated with an event in video sequences containing individual takes and extracting information contained thereon, a token being an object having typical appearance and having readable symbols on it, including the steps of:
- detecting, based on histograms from image properties for consecutive images, boundaries between individual takes (BD),
- pre-selecting candidate regions (60,61,62), which are regions in which tokens are likely to be found, in images of the video sequence following or preceding a detected boundary,
- classifying the candidate regions (60,61,62) into token or non-token using classifiers corresponding to one or several token types,
- locating tokens (SL) in candidate regions by generating a number of candidate bounding boxes with varying positions and wherein the token location is indicated by the candidate bounding box having the highest matching confidence value,
- locating information on the token (SL),
- interpreting the information (IE) on the token,
- performing a confidence analysis (CV) on the information to ensure that the information was interpreted correctly,
- merging information (IM) of consecutive images into a single, coherent set of information (SI) having linearly increasing time-codes by replacing time-code digits having low interpretation confidence or contradicting time information with interpolated time-code digits , and
- detecting changes (ACD) in the visual appearance of the token, the changes signalling a particular point of an event, by detecting and locating parts of the token subject to change, monitoring the change in visual appearance of the parts subject to change by comparing detected visual features in consecutive images, and outputting data (AS) describing the degree of change with regard to a pre-determined starting and/or end point.

2. The method of claim 1, **characterized in that** after detecting a boundary (BD) between individual takes a timer is set, upon time-out thereof the identification process is terminated.

3. The method of claim 1, **characterized in that** detecting boundaries (BD) between individual takes includes the steps of:
- creating a histogram (H[N], H[N-1]) from image properties for consecutive images,
- calculating the distance (δ[N-1,N]) between filtered histograms of consecutive images,
- comparing the calculated distance to a preset threshold (τ), and
- issuing a signal indicating a boundary is detected upon the distance exceeding the threshold.

4. The method of claim 1, **characterized in that** pre-selecting candidate regions (60, 61, 62) in candidate images includes the steps of:
- defining a reference feature value set corresponding to tokens (63),
- scanning the image at varying locations using a suitably shaped scanning window;
- computing a feature value set for each scanning window location,
- comparing each feature value set with the reference feature value set, and
- ranking the scanning windows containing feature value sets according to their distance to the reference feature value set.

5. The method of claim 1, **characterized in that** classifying the candidate regions (60, 61, 62) into token or non-token includes the steps of:
- calculating feature values from the candidate regions (60, 61, 62),
- comparing the calculated feature values to known classified feature values of reference images,
- assigning classifiers to the respective candidate regions, and
- assigning a classification confidence value (CV) to the classified candidate regions.

6. The method of claim 1, **characterized in that** locating tokens in the candidate regions (60, 61, 62) includes the steps of:
- scanning the candidate region using a suitably shaped scanning window,
- calculating coefficients describing the correlation between the scanning window and a reference image of a token,
- averaging the coefficients, thereby defining a matching confidence value,
- selecting the scanning window having the highest confidence value (CV) as candidate window.

7. The method of claim 6, **characterized in that** the scanning window and/or the reference image is decimated or interpolated in its spatial resolution prior to calculating the correlation coefficients, resulting in a corresponding number of pixels for the scanning window and the reference image.

8. The method of claim 6, **characterized in that the** candidate region (60, 61, 62) is re-classified to non-token if the confidence value is below a preset threshold.

9. The method of claim 1, **characterized in that** locating information on the token includes the steps of:
- cutting a sub-image from the candidate image using size and position data from the token localization process,
- constructing a probability map of the sub-image describing the probability that a pixel of the sub-image belongs to information on the token, and
- selecting an area of the sub-image with maximum probability values.

10. The method of claim 9, **characterized in that** the probability is obtained by comparing pixel properties of the sub-image to pre-defined pixel properties belonging to information elements.

11. The method of claims 1 and 9, **characterized in that** interpreting the information contained on the token includes the steps of:
- rotating the selected sub-image area with maximum probability to bring the information contained therein into horizontal orientation,
- binarizing the probability map values of the sub-image area,
- filtering the binarized map, and
- performing an optical character recognition on the filtered map.

12. The method of claim 1, **characterized in that** a confidence analysis is effected by checking information extracted from consecutive images for consistency.

13. The method of claim 1, **characterized in that** merging information elements includes replacing mismatching information elements and/or information elements having low confidence with interpolated information elements.

14. The method of claim 1, **characterized in that** detecting and locating parts of the token (63) subject to change includes the step of:
- analysing visual features in candidate regions and comparing the visual features to pre-determined visual features of tokens.

15. The method of claim 14, **characterized in that** the visual features are translated into simplified models for analysis and monitoring.

## Patentansprüche

1. Verfahren zum automatischen Identifizieren von Token, die einem Ereignis in Videosequenzen, die einzelne Aufnahmen enthalten, zugeordnet sind, und zum Auskoppeln darauf enthaltener Informationen, wobei ein Token ein Objekt mit einem typischen Aussehen ist und darauf lesbare Symbole aufweist, wobei das Verfahren die folgenden Schritte enthält:
- Detektieren von Begrenzungen zwischen einzelnen Aufnahmen (BD) auf der Grundlage von Histogrammen von Bildeigenschaften für aufeinanderfolgende Bilder,
- Vorauswählen von Kandidatengebieten (60, 61, 62), die Gebiete sind, in denen wahrscheinlich Token zu finden sind, in Bildern der Videosequenz, die auf eine detektierte Begrenzung folgen oder ihr vorausgehen,
- Klassifizieren der Kandidatengebiete (60, 61, 62) in Token oder Nicht-Token unter Verwendung von Klassifikatoren, die einem oder mehreren Token-Typen entsprechen,
- Ermitteln von Token (SL) in Kandidatengebieten durch Erzeugen einer Anzahl von Kandidaten-Bounding-Boxes mit veränderlichen Positionen und wobei der Token-Ort durch die Kandidaten-Bounding-Box mit dem höchsten passenden Vertrauenswert angegeben wird,
- Ermitteln von Informationen auf dem Token (SL),
- Interpretieren der Informationen (IE) auf dem Token,
- Ausführen einer Vertrauensanalyse (CV) an den Informationen, um sicherzustellen, dass die Informationen richtig interpretiert wurden,
- Vereinigen von Informationen (IM) aufeinanderfolgender Bilder in einer einzigen, kohärenten Menge von Informationen (SI) mit linear zunehmenden Zeitcodes durch Ersetzen von Zeitcodeziffern mit niedrigem Interpretationsvertrauenswert oder widersprechenden Zeitinformationen durch interpolierte Zeitcodeziffern, und
- Detektieren von Änderungen (ACD) des visuellen Aussehens des Tokens, wobei die Änderungen einen bestimmten Punkt eines Ereignisses signalisieren, durch Detektieren und Ermitteln von Teilen des Tokens, die der Änderung unterliegen, Überwachen der Änderung des visuellen Aussehens der Teile, die der Änderung unterliegen, durch Vergleichen detektierter visueller Merkmale in aufeinanderfolgenden Bildern und Ausgeben von Daten (AS), die den Grad der Änderung hinsichtlich eines vorgegebenen Anfangs- und/oder Endpunkts beschreiben.

2. Verfahren nach Anspruch 1, **dadurch gekennzeichnet, dass** nach dem Detektieren einer Begrenzung (BD) zwischen einzelnen Aufnahmen ein Zeitgeber eingestellt wird, bei dessen Ablauf der Identifizierungsprozess abgeschlossen wird.

3. Verfahren nach Anspruch 1, **dadurch gekennzeichnet, dass** das Detektieren von Begrenzungen (BD) zwischen einzelnen Aufnahmen die folgenden Schritte enthält:
- Erzeugen eines Histogramms (H[N], H[N-1]) aus Bildeigenschaften für aufeinanderfolgende Bilder,
- Berechnen der Entfernung (δ[N-1, N]) zwischen gefilterten Histogrammen aufeinanderfolgender Bilder,
- Vergleichen der berechneten Entfernung mit einem im Voraus eingestellten Schwellenwert (τ), und
- Ausgeben eines Signals, das angibt, dass eine Begrenzung detektiert wird, wenn die Entfernung den Schwellenwert übersteigt.

4. Verfahren nach Anspruch 1, **dadurch gekennzeichnet, dass** das Vorauswählen von Kandidatengebieten (60, 61, 62) in Kandidatenbildern die folgenden Schritte enthält:
- Definieren einer Referenzmerkmalswertmenge, die Token (63) entspricht,
- Abtasten des Bilds an verschiedenen Orten unter Verwendung eines geeignet geformten Abtastfensters;
- Berechnen einer Merkmalswertmenge für jeden Abtastfensterort,
- Vergleichen jeder Merkmalswertmenge mit der Referenzmerkmalswertmenge, und
- Einstufen der Abtastfenster, die Merkmalswertmengen enthalten, in Übereinstimmung mit ihrer Entfernung zu der Referenzmerkmalswertmenge.

5. Verfahren nach Anspruch 1, **dadurch gekennzeichnet, dass** das Klassifizieren der Kandidatengebiete (60, 61, 62) in Token oder Nicht-Token die folgenden Schritte enthält:
- Berechnen von Merkmalswerten von Kandidatengebieten (60, 61, 62),
- Vergleichen der berechneten Merkmalswerte mit bekannten klassifizierten Merkmalswerten von Referenzbildern,
- Zuweisen von Klassifikatoren zu den jeweiligen Kandidatengebieten, und
- Zuweisen eines Klassifikationsvertrauenswerts (CV) zu den klassifizierten Kandidatengebieten.

6. Verfahren nach Anspruch 1, **dadurch gekennzeichnet, dass** das Ermitteln von Token in den Kandidatengebieten (60, 61, 62) die folgenden Schritte enthält:
- Abtasten des Kandidatengebiets unter Verwendung eines geeignet geformten Abtastfensters,
- Berechnen von Koeffizienten, die die Korrelation zwischen dem Abtastfenster und einem Referenzbild eines Tokens beschreiben,
- Mitteln der Koeffizienten, dadurch Definieren eines passenden Vertrauenswerts,
- Auswählen des Abtastfensters mit dem höchsten Vertrauenswert (CV) als Kandidatenfenster.

7. Verfahren nach Anspruch 6, **dadurch gekennzeichnet, dass** das Abtastfenster und/oder das Referenzbild vor dem Berechnen der Korrelationskoeffizienten in ihrer räumlichen Auflösung dezimiert oder interpoliert werden, was zu einer entsprechenden Anzahl von Pixeln für das Abtastfenster und für das Referenzbild führt.

8. Verfahren nach Anspruch 6, **dadurch gekennzeichnet, dass** das Kandidatengebiet (60, 61, 62) in Nicht-Token neu klassifiziert wird, falls der Vertrauenswert unter einem im Voraus festgelegten Schwellenwert liegt.

9. Verfahren nach Anspruch 1, **dadurch gekennzeichnet, dass** das Ermitteln von Informationen auf dem Token die folgenden Schritte enthält:
- Ausschneiden eines Teilbilds aus dem Kandidatenbild unter Verwendung von Größen- und Positionsdaten von dem Tokenermittlungsprozess,
- Konstruieren einer Wahrscheinlichkeitskarte des Teilbilds, die die Wahrscheinlichkeit beschreibt, dass ein Pixel des Teilbilds zu Informationen auf dem Token gehört, und
- Auswählen eines Bereichs des Teilbilds mit maximalen Wahrscheinlichkeitswerten.

10. Verfahren nach Anspruch 9, **dadurch gekennzeichnet, dass** die Wahrscheinlichkeit durch Vergleichen von Pixeleigenschaften des Teilbilds mit vordefinierten Pixeleigenschaften, die zu Informationselementen gehören, erhalten wird.

11. Verfahren nach Anspruch 1 und 9, **dadurch gekennzeichnet, dass** das Interpretieren der auf dem Token enthaltenen Informationen die folgenden Schritte enthält:
- Drehen des ausgewählten Teilbildbereichs mit maximaler Wahrscheinlichkeit, um die darin enthaltenen Informationen in die horizontale Orientierung zu bringen,
- Binarisieren der Wahrscheinlichkeitskartenwerte des Teilbildbereichs,
- Filtern der binarisierten Karte, und
- Ausführen einer optischen Zeichenerkennung an der gefilterten Karte.

12. Verfahren nach Anspruch 1, **dadurch gekennzeichnet, dass** durch Prüfen von Informationen, die aus aufeinanderfolgenden Bildern ausgekoppelt werden, auf Konsistenz eine Vertrauensanalyse bewirkt wird.

13. Verfahren nach Anspruch 1, **dadurch gekennzeichnet, dass** das Vereinigen von Informationselementen das Ersetzen nicht zusammenpassender Informationselemente und/oder von Informationselementen mit niedrigem Vertrauen durch interpolierte Informationselemente enthält.

14. Verfahren nach Anspruch 1, **dadurch gekennzeichnet, dass** das Detektieren und Ermitteln von Teilen des Tokens (63), das der Änderung unterliegt, den folgenden Schritt enthält:
- Analysieren visueller Merkmale in Kandidatengebieten und Vergleichen der visuellen Merkmale mit im Voraus bestimmten visuellen Merkmalen von Token.

15. Verfahren nach Anspruch 14, **dadurch gekennzeichnet, dass** die visuellen Merkmale zur Analyse und Überwachung in vereinfachte Modelle übersetzt werden.

## Revendications

1. Procédé pour identifier automatiquement des repères associés à un événement dans des séquences vidéo contenant des prises individuelles et pour extraire des informations qui y sont contenues, un repère étant un objet ayant une apparence typique et portant des symboles lisibles, comprenant les étapes suivantes :
- détection, d'après des histogrammes de propriétés d'image d'images consécutives, de limites entre des prises individuelles (BD),
- présélection de régions candidates (60, 61, 62), qui sont des régions dans lesquelles des repères sont susceptibles de se trouver, dans des images de la séquence vidéo suivant ou précédant une limite détectée,
- classification des régions candidates (60, 61, 62) comme repères ou non repères à l'aide de classificateurs correspondant à un ou plusieurs types de repères,
- localisation de repères (SL) dans des régions candidates en générant un certain nombre de zones de délimitation candidates avec des positions variables et où l'emplacement des repères est indiqué par la zone de délimitation candidate ayant la valeur de confiance de correspondance la plus élevée,
- localisation d'informations sur le repère (SL),
- interprétation des informations (IE) sur le repère,
- exécution d'une analyse de confiance (CV) sur les informations pour s'assurer que les informations ont été correctement interprétées,
- fusion d'informations (IM) d'images consécutives en un ensemble cohérent d'informations (SI) ayant des codes temporels à augmentation linéaire en remplaçant les chiffres des codes temporels ayant une confiance d'interprétation basse ou des informations temporelles contradictoires par des chiffes de codes temporels interpolés, et
- détection de changements (ACD) dans l'apparence visuelle du repère, les changements signalant un point particulier d'un événement, en détectant et en localisation des parties du repère sujettes au changement, en contrôlant le changement de l'apparence visuelle des pièces sujettes au changement par la comparaison de caractéristiques visuelles détectées dans des images consécutives et en produisant des données (AS) décrivant le degré de changement par rapport à un point de départ et/ou de fin prédéterminé.

2. Procédé selon la revendication 1, **caractérisé en ce que,** après la détection d'une limite (BD) entre des prises individuelles, un délai est défini, au terme duquel le processus d'identification prend fin.

3. Procédé selon la revendication 1, **caractérisé en ce que** la détection de limites (BD) entre des prises individuelles inclut les étapes suivantes :
- création d'un histogramme (H[N], H[N-1]) à partir de propriétés d'image d'images consécutives.
- calcul de la distance (δ[N-1,N]) entre des histogrammes filtrés d'images consécutives,
- comparaison de la distance calculée à un seuil prédéfini (c), et
- émission d'un signal indiquant qu'une limite est détectée lorsque la distance dépasse le seuil.

4. Procédé selon la revendication 1, **caractérisé en ce que** la présélection de régions candidates (60, 61, 62) dans des images candidates inclut les étapes suivantes :
- définition d'un ensemble de valeurs de caractéristiques de référence correspondant aux repères (63),
- analyse de l'image à différents emplacements à l'aide d'une fenêtre d'analyse correctement dimensionnée ;
- calcul d'un ensemble de valeurs de caractéristiques pour chaque emplacement de fenêtre d'analyse,
- comparaison de chaque ensemble de valeurs de caractéristiques à l'ensemble de valeurs de caractéristiques de référence, et
- classement des fenêtres d'analyse contenant des ensembles de valeurs de caractéristiques selon leur distance par rapport à un ensemble de valeurs de caractéristiques de référence.

5. Procédé selon la revendication 1, **caractérisé en ce que** la classification des régions candidates (60, 61, 62) comme repères ou non repères inclut les étapes suivantes :
- calcul de valeurs de caractéristiques à partir des régions candidates (60, 61, 62),
- comparaison des valeurs de caractéristiques calculées à des valeurs de caractéristiques classifiées connues d'images de référence,
- affectation de classificateurs aux régions candidates respectives, et
- affectation d'une valeur de confiance de classification (CV) aux régions candidates classifiées.

6. Procédé selon la revendication 1, **caractérisé en ce que** la localisation de repères dans les régions candidates (60, 61, 62) inclut les étapes suivantes :
- analyse de la région candidate à l'aide d'une fenêtre d'analyse correctement dimensionnée ;
- calcul de coefficients décrivant la corrélation entre la fenêtre d'analyse et une image de référence d'un repère,
- calcul de la moyenne des coefficients, définissant ainsi une valeur de confiance de correspondance,
- sélection de la fenêtre d'analyse ayant la valeur de confiance la plus élevée (CV) comme fenêtre candidate.

7. Procédé selon la revendication 6, **caractérisé en ce que** la fenêtre d'analyse et/ou l'image de référence sont décimées ou interpolées dans leur résolution spatiale avant le calcul des coefficients de corrélation, résultant en un nombre correspondant de pixels pour la fenêtre d'analyse et l'image de référence.

8. Procédé selon la revendication 6, **caractérisé en ce que** la région candidate (60, 61, 62) est reclassifiée comme non repère si la valeur de confiance est inférieure à un seuil prédéfini.

9. Procédé selon la revendication 1, **caractérisé en ce que** la localisation d'informations sur le repère inclut les étapes suivantes :
- extraction d'une sous-image de l'image candidate avec des données de taille et de position du processus de localisation du repère,
- construction d'une carte de probabilité de la sous-image décrivant la probabilité qu'un pixel de la sous-image appartienne aux informations sur le repère, et
- sélection d'une zone de la sous-image ayant des valeurs de probabilité maximales.

10. Procédé selon la revendication 9, **caractérisé en ce que** la probabilité est obtenue en comparant les propriétés de pixel de la sous-image à des propriétés de pixel prédéfinies appartenant aux éléments d'information.

11. Procédé selon les revendications 1 et 9, **caractérisé en ce que** l'interprétation des informations contenues sur le repère inclut les étapes suivantes :
- rotation de la zone de sous-image sélectionnée ayant la probabilité maximale pour donner aux informations qui y sont contenues une orientation horizontale,
- binarisation des valeurs de la carte de probabilité de la zone de la sous-image,
- filtrage de la carte binarisée, et
- exécution d'une reconnaissance de caractères optique sur la carte filtrée.

12. Procédé selon la revendication 1, **caractérisé en ce qu'**une analyse de confiance est exécutée en vérifiant les informations extraites d'images consécutives à des fins de cohérence.

13. Procédé selon la revendication 1, **caractérisé en ce que** la fusion d'éléments d'information inclut le remplacement d'éléments d'information discordants et/ou d'éléments d'information ayant un indice de confiance bas par des éléments d'information interpolés.

14. Procédé selon la revendication 1, **caractérisé en ce que** la détection et la localisation de parties du repère (63) sujettes au changement incluent l'étape suivante :
- analyse de caractéristiques visuelles dans des régions candidates et comparaison des caractéristiques visuelles à des caractéristiques visuelles de repères prédéterminées.

15. Procédé selon la revendication 14, **caractérisé en ce que** les caractéristiques visuelles sont converties en modèles simplifiés à des fins d'analyse et de contrôle.
